# EUROPÄISCHE PATENTSCHRIFT

(11) **EP 3 445 623 B1**
(45) Veröffentlichungstag und Bekanntmachung des Hinweises auf die Patenterteilung: **16.09.2020**
(21) Anmeldenummer: 17707234.5
(22) Anmeldetag: 23.02.2017
(51) Int. Cl.: B60T 8/34

(54) **HYDRAULIKBLOCK UND HERSTELLUNGSVERFAHREN FÜR EINEN HYDRAULIKBLOCK MIT ZUMINDEST EINEM RÜCKSCHLAGVENTIL**
HYDRAULIC BLOCK AND MANUFACTURING METHOD FOR A HYDRAULIC BLOCK HAVING AT LEAST ONE NON-RETURN VALVE
BLOC HYDRAULIQUE ET PROCÉDÉ DE FABRICATION POUR UN BLOC HYDRAULIQUE COMPRENANT AU MOINS UNE SOUPAPE ANTI-RETOUR

(30) Priorität: 21.04.2016 DE 102016206785
(43) Veröffentlichungstag der Anmeldung: 27.02.2019
(73) Patentinhaber: Robert Bosch GmbH, 70442 Stuttgart (DE)
(72) Erfinder: GUGGENMOS, Harald, 87509 Immenstadt/Seifen (DE); WEH, Andreas, 87477 Sulzberg (DE)
(86) Internationale Anmeldenummer: PCT/EP2017/054102
(87) Internationale Veröffentlichungsnummer: WO 2017/182174

(56) Entgegenhaltungen:
- EP-A1- 0 033 010
- EP-A2- 1 759 947
- JP-A- 2001 263 560
- US-A- 2 415 245
- US-A1- 2009 242 049
- US-B1- 6 206 486

## Beschreibung

Die Erfindung betrifft einen Hydraulikblock für ein Bremssystem eines Fahrzeugs und ein Bremssystem für ein Fahrzeug. Ebenso betrifft die Erfindung ein Herstellungsverfahren für einen Hydraulikblock für ein Bremssystem eines Fahrzeugs mit zumindest einem Rückschlagventil.

### Stand der Technik

In der DE 10 2014 215 311 A1 ist ein Bremssystem für ein Fahrzeug beschrieben, welches mit einer motorisierten Kolben-Zylinder-Vorrichtung zum autonomen Bremsdruckaufbau ausgestattet ist. Während des autonomen Bremsdruckaufbaus soll ein standardgemäßes Pedalgefühl für einen ein Bremspedal des Bremssystems betätigenden Fahrer mittels mindestens einer Simulatorvorrichtung gewährleistbar sein. Sowohl die mindestens eine Simulatorvorrichtung des Bremssystems als auch die motorisierte Kolben-Zylinder-Vorrichtung sind über je ein Rückschlagventil an einem Bremsflüssigkeitsreservoir des Bremssystems angebunden.

Die US 2 415 245 A beschreibt einen Hydraulikblock mit einem integrierten Hauptbremszylinder und einem integrierten Bremsflüssigkeitsreservoir. Das Bremsflüssigkeitsreservoir ist über ein Rückschlagventil mit dem Hauptbremszylinder verbunden, wobei das Rückschlagventil eine gestufte Ventilbohrung, einen in den Hydraulikblock eingesetzten Ventilsitz und einen käfigfreien kugelförmigen Ventilkörper aufweist.

Weiteren Beispiele für Rückschlagventile sind in der EP 0 033 010 A1, der EP 1 759 947 A2, der US 2009/242049 A1 und der JP 2001 263560 A offenbart.

### Offenbarung der Erfindung

Die Erfindung schafft einen Hydraulikblock für ein Bremssystem eines Fahrzeugs mit den Merkmalen des Anspruchs 1, einen Hydraulikblock für ein Bremssystem eines Fahrzeugs mit den Merkmalen des Anspruchs 2ein Bremssystem für ein Fahrzeug mit den Merkmalen des Anspruchs 7, ein Herstellungsverfahren für einen Hydraulikblock für ein Bremssystem eines Fahrzeugs mit zumindest einem Rückschlagventil mit den Merkmalen des Anspruchs 8 und ein Herstellungsverfahren für einen Hydraulikblock für ein Bremssystem eines Fahrzeugs mit zumindest einem Rückschlagventil mit den Merkmalen des Anspruchs 9.

### Vorteile der Erfindung

Die vorliegende Erfindung schafft kostengünstige Hydraulikblöcke mit je zumindest einem funktionsoptimierten Rückschlagventil. Aufgrund des direkten Anbringens des Ventilsitzes in der als gestufte Vertiefung in dem jeweiligen Hydraulikblock ausgebildeten Rückschlagventil-Aufnahmebohrung wird zum Ausbilden des zumindest einen Rückschlagventils keine Vorbaugruppe benötigt. Stattdessen sind/werden der Ventilsitz und der Ventilkörper jedes Rückschlagventils direkt in der zugeordneten Rückschlagventil-Aufnahmebohrung/dem Hydraulikblock montiert. Mittels des Verzichts auf die Vorbaugruppe wird eine Anzahl von herkömmlicherweise Verwirbelungen auslösenden Rückschlagventil-Komponenten reduziert. Insbesondere ist dafür gesorgt, dass der gewünschte Volumenstrom durch das jeweilige Rückschlagventil (z.B. zum Ansaugen/Nachschnüffeln von Volumen aus einem Bremsflüssigkeitsreservoir) nicht von einem Käfig behindert wird. Aufgrund der gestuften Ausbildung der Rückschlagventil-Aufnahmebohrung ist zusätzlich eine strömungsoptimierte Hubbegrenzung in dem mindestens einen Rückschlagventil erreicht.

Der Ventilkörper ist rotationssymmetrisch mit einer zu dem Ventilsitz ausgerichteten gerundeten Seite ausgebildet. Die rotationssymmetrische Ausbildung des Ventilkörpers verhindert das Auftreten von Verwirbelungen während eines Durchströmens des jeweiligen Rückschlagventils mit Bremsflüssigkeit (bzw. Hydraulikflüssigkeit) in der vorgegebenen Durchflussrichtung. Gleichzeitig ist gewährleistet, dass die gerundete Seite einen flüssigkeitsdichten Kontakt mit einem Dichtbereich des Ventilsitzes eingehen kann, wenn der Ventilkörper gegen den Ventilsitz gedrückt wird und auf diese Weise ein Durchströmen des jeweiligen Rückschlagventils mit Bremsflüssigkeit in einer der Durchflussrichtung entgegengesetzten Schließrichtung verhindert ist. Der Ventilsitz kann mit einer sogenannten Self-Clinch-Verbindung in dem Hydraulikblock befestigt sein.

Bevorzugter Weise ist ein die zu dem Ventilsitz ausgerichtete gerundete Seite aufweisender Ventilbereich des Ventilkörpers aus einem ersten Material mit einem ersten mechanischen Widerstand ausgebildet, und ein Rest des Ventilkörpers ist aus einem zweiten Material mit einem zweiten mechanischen Widerstand kleiner als dem ersten mechanischen Widerstand ausgebildet. Der den Dichtbereich des Ventilsitzes kontaktierende Ventilbereich des Ventilkörpers aus dem ersten Material weist somit eine vorteilhaft hohe Festigkeit auf. Dies gewährleistet den gewünschten flüssigkeitsdichten Kontakt zwischen dem Ventilkörper und dem Dichtbereich, sofern der Ventilkörper gegen den Ventilsitz gedrückt wird.

Beispielsweise ist die Rückschlagventil-Aufnahmebohrung auf einer Reservoirseite des Hydraulikblocks, an welcher ein Bremsflüssigkeitsreservoir montierbar oder montiert ist, ausgebildet. Die gute Durchströmbarkeit des jeweiligen Rückschlagventils in seiner vorgegebenen Durchflussrichtung kann somit vorteilhaft zum Ansaugen/Nachschnüffeln von Bremsflüssigkeit aus dem Bremsflüssigkeitsreservoir genutzt werden.

Insbesondere kann eine Plunger-Aufnahmebohrung in dem Hydraulikblock ausgebildet sein und die Rückschlagventil-Aufnahmebohrung kann hydraulisch mit der Plunger-Aufnahmebohrung (mit einer direkten Bohrung) verbunden sein. Das strömungsoptimierte Design des in der Rückschlagventil-Aufnahmebohrung ausgebildeten Rückschlagventils kann somit für eine Vielzahl von Prozessen, welche mittels einer in der Plunger-Aufnahmebohrung ausgebildeten Plungervorrichtung ausgeführt werden, genutzt werden.

Vorzugsweise weist der Ventilsitz eine Schneidkante auf, und das mindestens eine Material des Hydraulikblocks ist gegenüber dem mindestens einen Material des Ventilsitzes weicher und aufgrund eines Kontakts mit der Schneidkante des Ventilsitzes umgeformt. Dies gewährleistet eine formschlüssige dichte Verbindung zwischen dem Ventilsitz und dem Hydraulikblock nach einer einfach ausführbaren Montage des Ventilsitzes.

Die vorausgehend beschriebenen Vorteile sind auch bei einem Bremssystem für ein Fahrzeug mit einem derartigen Hydraulikblock sichergestellt.

Des Weiteren sind die oben beschriebenen Vorteile auch realisierbar durch ein Ausführen eines korrespondierenden Herstellungsverfahrens für einen Hydraulikblock für ein Bremssystem eines Fahrzeugs mit zumindest einem Rückschlagventil. Es wird darauf hingewiesen, dass das Herstellungsverfahren gemäß den oben beschriebenen Ausführungsformen des Hydraulikblocks weiterbildbar ist.

In einer vorteilhaften Ausführungsform des Herstellungsverfahrens wird vor dem Einbringen des Ventilkörpers und dem Befestigen des Ventilsitzes der Ventilkörper mittels eines Stempels an den Ventilsitz angesaugt, wobei gleichzeitig eine Dichtheit eines Kontakts zwischen dem Ventilkörper und dem Ventilsitz überprüft wird. Ein Vorliegen eines Fehlers an dem Ventilkörper oder an dem Ventilsitz, welcher den gewünschten flüssigkeitsdichten Kontakt zwischen dem Ventilkörper und dem Ventilsitz verhindert, kann somit frühzeitig und mittels eines kostengünstig ausführbaren Verfahrensschritts erkannt werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Teildarstellung einer ersten Ausführungsform des Hydraulikblocks;
- Fig. 2: eine schematische Teildarstellung einer zweiten Ausführungsform des Hydraulikblocks;
- Fig. 3: eine schematische Teildarstellung einer dritten Ausführungsform des Hydraulikblocks;
- Fig. 4: einen Schaltplan einer Ausführungsform des Bremssystems; und
- Fig. 5a bis 5f: schematische Darstellungen von Verfahrensschritten einer Ausführungsform des Herstellungsverfahrens für einen Hydraulikblock für ein Bremssystem eines Fahrzeugs mit zumindest einem Rückschlagventil.

### Ausführungsformen der Erfindung

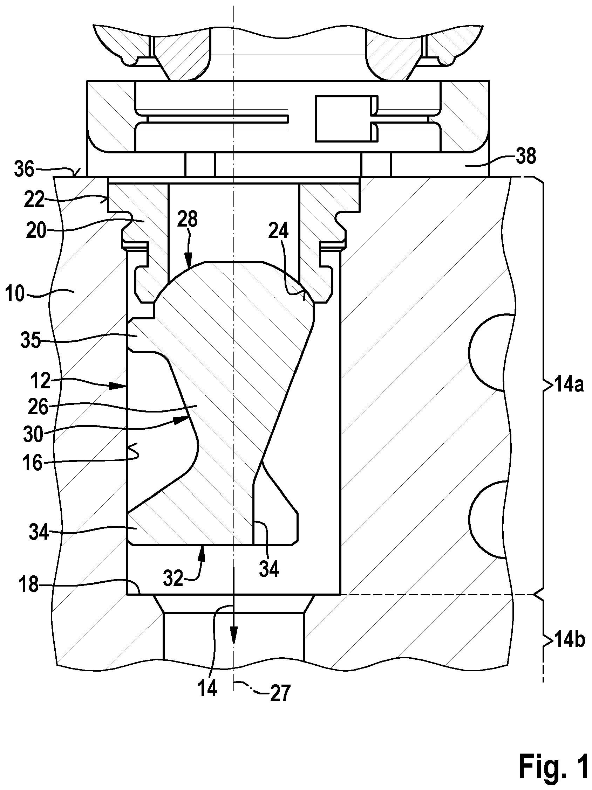

Fig. 1 zeigt eine schematische Teildarstellung einer ersten Ausführungsform des Hydraulikblocks.

Der in Fig. 1 teilweise schematisch wiedergegebene Hydraulikblock 10 ist aus mindestens einem Metall (z.B. Aluminium) und/oder mindestens einem Kunststoff geformt. Vorzugsweise ist der Hydraulikblock 10 ein Gussteil oder ein Spritzgussteil, bzw. eine Extrusion mit anschließender mechanischer Bearbeitung. Es wird darauf hingewiesen, dass eine Ausbildbarkeit des Hydraulikblocks 10 nicht auf die Verwendung eines bestimmten Materials dafür beschränkt ist.

Der Hydraulikblock 10 weist zumindest ein Rückschlagventil 12 auf, welches in einer sich teilweise durch den Hydraulikblock 10 erstreckenden Rückschlagventil-Aufnahmebohrung 14 angeordnet ist. Die Rückschlagventil-Aufnahmebohrung 14 ist als eine gestufte Vertiefung in den Hydraulikblock 10 eingeformt. Unter der Einformung der Rückschlagventil-Aufnahmebohrung 14 in den Hydraulikblock 10 ist zu verstehen, dass die Rückschlagventil-Aufnahmebohrung 14 keine Öffnung eines in dem Hydraulikblock 10 eingesetzten Einsetzteils ist. Stattdessen ist mindestens eine Innenwand 16 der Rückschlagventil-Aufnahmebohrung 14 eine Grenzfläche des Hydraulikblocks 10, insbesondere eine gebohrte, gespante, gegossene oder spritzgegossene Grenzfläche des Hydraulikblocks 10. Die Rückschlagventil-Aufnahmebohrung 14 kann beispielsweise in den Hydraulikblock 10 gebohrt/gespant sein, so dass insbesondere noch Bohrwerkzeugspuren oder Spanwerkzeugspuren an der mindestens einen Innenwand 16 der Rückschlagventil-Aufnahmebohrung 14 vorliegen können. Alternativ kann die Rückschlagventil-Aufnahmebohrung 14 auch mittels eines Vorsprungs in einem Gussteil beim Gießen/Spritzgießen des Hydraulikblocks 10 gebildet sein, so dass die mindestens eine Innenwand 16 der Rückschlagventil-Aufnahmebohrung 14 auch Aushärtungsspuren oder Abdruckspuren von dem Gussteil aufweisen kann.

Die Rückschlagventil-Aufnahmebohrung 14 weist als gestufte Vertiefung einen ersten Teilbereich 14a mit zumindest einem Mindestdurchmesser und einen inneren zweiten Teilbereich 14b mit höchstens einem Höchstdurchmesser kleiner als dem Mindestdurchmesser auf. Die Rückschlagventil-Aufnahmebohrung 14 ist damit eine sich (von außen nach innen) verjüngende gestufte Vertiefung. Zwischen dem ersten Teilbereich 14a und dem zweiten Teilbereich 14b kann insbesondere eine (rotationssymmetrische) Stufe 18 ausgebildet sein.

Das Rückschlagventil 12 weist einen fest angeordneten und zumindest teilweise in die Rückschlagventil-Aufnahmebohrung 14 hineinragenden Ventilsitz 20 auf. Vorzugsweise ist der Ventilsitz 20 aus Metall, bzw. Stahl. Der Ventilsitz 20 ist in einem direkten Kontakt mit der mindestens einen Innenwand 16 der Rückschlagventil-Aufnahmebohrung 14 an und/oder in der Rückschlagventil-Aufnahmebohrung 14 eingesetzt. Der Ventilsitz 20 kann insbesondere in mindestens eine den Ventilsitz 20 kontaktierende Fläche 22 des Hydraulikblocks 10 eingepresst sein. Die mindestens eine den Ventilsitz 20 kontaktierende Fläche 22 des Hydraulikblocks 10 kann deshalb Einpressspuren (bzw. entsprechende Verformungsspuren) aufweisen. Außerdem kann der Ventilsitz 20 durch einen Druck gegen die mindestens eine Fläche 22 des Hydraulikblocks 10 so verformt sein, dass die mindestens eine Fläche 22 teilweise von einem Material des Ventilsitzes 20 umformt ist. Mittels des Umformens der mindestens einen den Ventilsitz 20 direkt kontaktierenden Fläche 22 ist eine vorteilhafte Dichtheil/Flüssigkeitsdichtheit zwischen dem Hydraulikblock 10 und dem Ventilsitz 20 erreicht. Die mindestens eine den Ventilsitz 20 kontaktierende Fläche 22 des Hydraulikblocks 10 liegt vorzugsweise an einem äußeren Ende der Rückschlagventil-Aufnahmebohrung 14.

Der Ventilsitz 20 kann mit einer Schneidkante ausgebildet sein. Zentrisch am Ventilsitz 20 liegt ein (konischer) Dichtbereich/Dichtsitz 24, an welchen sich ein Ventilkörper 26 des Rückschlagventils 12 anlagern kann. Der Ventilkörper 26 ist verstellbar innerhalb des ersten Teilbereichs 14a der Rückschlagventil-Aufnahmebohrung 14 angeordnet. Dies bewirkt, dass das Rückschlagventil 12 in einer Richtung von dem Ventilsitz 20 in den zweiten Teilbereich 14b der Rückschlagventil-Aufnahmebohrung 14 (der sogenannten Durchflussrichtung, Durchströmrichtung, Durchlassrichtung oder Saugrichtung) durchströmbar ist, während ein Flüssigkeitsstrom durch das Rückschlagventil 12 in einer der Durchflussrichtung entgegen gesetzten Richtung (der sogenannten Schließrichtung oder Sperrrichtung) mittels des flüssigkeitsdichten Kontakts des Ventilkörpers 26 an dem Ventilsitz 20 unterbunden ist.

Außerdem ist die Anordnung des Ventilkörpers 26 innerhalb des ersten Teilbereichs 14a käfigfrei. Darunter ist zu verstehen, dass das Rückschlagventil 12 keinen herkömmlichen Käfig zum Führen des Ventilkörpers 26 aufweist. Stattdessen ist der Ventilkörper 26 so ausgebildet, dass er mittels eines direkten Kontakts zwischen mindestens einer Oberfläche des Ventilkörpers 26 und der mindestens einen Innenwand 16 der Rückschlagventil-Aufnahmebohrung 14 führbar ist.

Das in Fig. 1 dargestellte Rückschlagventil 12 ist federlos ausgebildet. Vorteilhafterweise besteht das Rückschlagventil 12 lediglich aus dem Ventilkörper 26 und dem Ventilsitz 20. Verwirbelungen, wie sie herkömmlicherweise von zusätzlichen Rückschlagventil-Komponenten (wie z.B. einem Käfig oder einer Feder) ausgelöst werden, sind somit bei einem Betrieb des Rückschlagventils 12 (nahezu) unterbunden. Trotz des Verzichts auf eine Feder weist das Rückschlagventil 12 außerdem ein vergleichsweise schnelles Schließverhalten auf. Dazu ist mittels der gestuften Ausbildung der Rückschlagventil-Aufnahmebohrung 14 eine Hubbegrenzung geschaffen, indem der Höchstdurchmesser des zweiten Teilbereichs 14b der Rückschlagventil-Aufnahmebohrung 14 kleiner als ein Durchmesser des Ventilkörpers 20 senkrecht zu der Durchflussrichtung des Rückschlagventils 12 an einem von dem Ventilsitz 20 weg gerichteten Ende des Ventilkörpers 20 ist. (Ein Hineinverstellen des Ventilkörpers 26 in den zweiten Teilbereich 14b ist damit verlässlich unterbunden.) Ein Hub des Rückschlagventils 14 ist somit auf höchstens eine Höhe des ersten Teilbereichs 14a der Rückschlagventil-Aufnahmebohrung 14 (entlang der Durchflussrichtung) begrenzt. Da das Rückschlagventil 12 somit durch ein Verstellen des Ventilkörpers 26 in die Schließrichtung um höchstens den baulich vorgegebenen Hub flüssigkeitsdicht schließbar ist, ist ein Ansprechverhalten eines mit dem Rückschlagventil 12 ausgestatteten Bremssystems nicht/kaum eingeschränkt.

In der Ausführungsform der Fig. 1 ist der Ventilkörper 26 rotationssymmetrisch ausgebildet. Eine Form des Ventilkörpers 26 ist damit strömungsoptimiert. Mittels einer rotationssymmetrischen Ausbildung des gesamten Rückschlagventils 12 bezüglich einer Rotationssymmetrieachse 27 kann dessen Design zusätzlich strömungsoptimiert werden.

Vorzugsweise ist der Ventilkörper 26 aus mindestens einem Kunststoff hergestellt.
Vorteilhafterweise ist der Ventilkörper 26 außerdem mit einer zu dem Ventilsitz 20 ausgerichteten gerundeten Seite 28 ausgebildet. Dies trägt dazu bei, dass das Rückschlagventil 12 mittels eines Kontakts zwischen den Ventilkörper 26 und dem Ventilsitz 20 (speziell dem Dichtbereich 24) flüssigkeitsdicht abdichtbar ist. Außerdem hat der Ventilkörper 26 einen kegelstumpfförmigen Zwischenabschnitt 30. Man kann die Form des Ventilkörpers 26 deshalb als tropfenförmig oder tropfenähnlich umschreiben. Diese Tropfenform oder tropfenähnliche Form des Ventilkörpers 26 ist bezüglich eines Flüssigkeitsstroms durch das Rückschlagventil 12 in seiner vorgegebenen Durchflussrichtung strömungsoptimiert. Somit kann vergleichsweise viel Bremsflüssigkeit in möglichst kurzer Zeit entlang der vorgegebenen Durchflussrichtung durch das Rückschlagventil 12 fließen.

Beispielhaft weist der in Fig. 1 dargestellte Ventilkörper 26 auf einer von dem Ventilsitz 20 weg gerichteten Seite 32 des Ventilkörpers 26 Führungsvorsprünge 34 auf, welche in Führungsbahnen in der mindestens einen Innenwand 16 der Rückschlagventil-Aufnahmebohrung 14 hineinragen. Damit ist eine verlässliche Führung des Ventilkörpers 26 in dem ersten Teilbereich 14 so sichergestellt, dass der in die Schließrichtung verstellte Ventilkörper 26 gezielt auf den Dichtbereich 24 des Ventilsitzes 20 trifft. Optionaler Weise weist der Ventilkörper an einem zu der gerundeten Seite 28 benachbarten Teil des Zwischenabschnitts 30 weitere Führungsvorsprünge 35 auf, welche ebenfalls in Führungsbahnen in der mindestens einen Innenwand 16 der Rückschlagventil-Aufnahmebohrung 14 hineinragen.

In der Ausführungsform der Fig. 1 ist die Rückschlagventil-Aufnahmebohrung 14 auf einer Reservoirseite 36 des Hydraulikblocks 10 ausgebildet, an welcher ein Bremsflüssigkeitsreservoir 38 montierbar oder montiert ist. Das Rückschlagventil 12 kann somit vorteilhaft zum Steuern eines Bremsflüssigkeitstransfers zwischen dem Bremsflüssigkeitsreservoir 38 und dem mit dem Rückschlagventil 12 ausgestatteten Bremssystem eingesetzt werden. Auf die damit geschaffenen Vorteile des Rückschlagventils 12 wird unten noch genauer eingegangen.

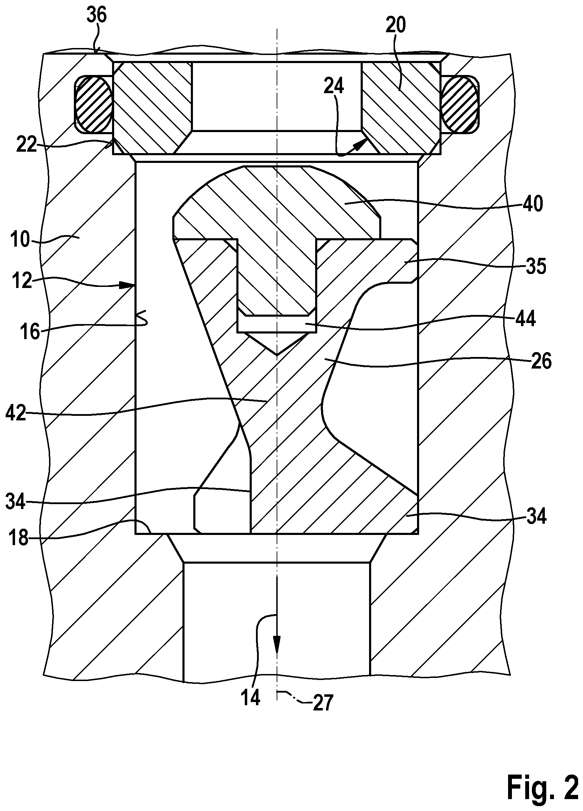

Fig. 2 zeigt eine schematische Teildarstellung einer zweiten Ausführungsform des Hydraulikblocks.

Auch der in Fig. 2 teilweise schematisch dargestellte Hydraulikblock 10 weist ein federloses und käfigloses Rückschlagventil 12 auf. Erneut ist eine Hubbegrenzung des Ventilkörpers 26 mittels der Ausbildung der Stufe 18 an der als Stufenbohrung ausgebildeten Rückschlagventil-Aufnahmebohrung 14 erreicht. Aufgrund der rotationssymmetrischen Form der Stufe 18 ist auch in diesem Fall die Rückschlagventil-Aufnahmebohrung 14 strömungsoptimiert.

Im Unterschied zu der zuvor beschriebenen Ausführungsform ist der Ventilkörper 26 der Fig. 2 als Schwimmventil ausgeführt. Dazu ist der Ventilkörper 26 aus mindestens einem Material so geformt, dass ein Quotient aus einem Gesamtgewicht des Ventilkörpers 26 und einem Gesamtvolumen des Ventilkörpers 26 kleiner als eine Dichte von Bremsflüssigkeit oder Wasser (aber größer als die Dichte von Luft) ist. Dies stellt beispielsweise sicher, dass Luft gezielt aus dem Rückschlagventil 12 entweichen kann. Zusätzlich trägt eine aus einer Differenz zwischen dem Quotienten und der Dichte von Bremsflüssigkeit resultierende Auftriebskraft bei einem Schwimmventil stärker dazu bei, dass der Ventilkörper 26 gegen den Dichtbereich 24 des Ventilsitzes 20 gedrückt wird, und das Rückschlagventil 12 somit verlässlicher abdichtet. Die Ausbildung des Ventilkörpers 26 als Schwimmventil hat keinerlei Auswirkungen auf einen in Druckflussrichtung durch das Rückschlagventil 12 strömenden Flüssigkeitsstrom an dem Ventilkörper 26 vorbei. Ein Nachlade- oder Saugverhalten des Rückschlagventils 12 wird somit durch die Ausbildung des Ventilkörpers 26 als Schwimmventil nicht beeinträchtigt.

Der vorteilhafte Quotient aus dem Gesamtgewicht des Ventilkörpers 26 und dem Gesamtvolumen des Ventilkörpers 26 (kleiner als der Dichte von Bremsflüssigkeit) kann beispielsweise dadurch erreicht werden, dass der Ventilkörper 26 aus einem einzigen Material mit einer Dichte kleiner als der Dichte von Bremsflüssigkeit geformt wird. In der Ausführungsform der Fig. 2 ist der Ventilkörper 26 jedoch in der 2K-Technik ausgeführt. Dabei ist ein Ventilbereich 40 des Ventilkörpers 26, welcher die zu dem Ventilsitz 20 ausgerichtete gerundete Seite 28 aufweist, aus einem ersten Material mit einem ersten mechanischen Widerstand (bzw. einer ersten Festigkeit) ausgebildet, während ein Rest 42 des Ventilkörpers 26 aus einem zweiten Material mit einem zweiten mechanischen Widerstand kleiner als dem ersten mechanischen Widerstand (bzw. mit einer zweiten Festigkeit kleiner als der ersten Festigkeit) ausgebildet ist. Vor allem für den Ventilbereich 40 mit der zu dem Ventilsitz 20 ausgerichteten gerundeten Seite 28 ist eine geringe Verformbarkeit vorteilhaft zum Realisieren des gewünschten flüssigkeitsdichten Kontakts zwischen dem Ventilbereich 40 und dem Dichtbereich 24 des Ventilsitzes 20. Demgegenüber ist für den von dem Ventilsitz 20 weg gerichteten Rest 42 keine geringe Verformbarkeit notwendig. Es ist deshalb vorteilhaft, für den Ventilbereich 40 das erste Material mit dem höheren mechanischen Widerstand (und damit auch mit der höheren Dichte) zu verwenden, während der Rest 42 aus dem zweiten Material mit dem geringeren mechanischen Widerstand (und somit der geringeren Dichte) gebildet wird.

Zur zusätzlichen Reduzierung des Quotienten aus dem Gesamtgewicht des Ventilkörpers 26 und dem Gesamtvolumen des Ventilkörpers 26 umschließt der Ventilkörper 26 der Fig. 2 einen mit Luft gefüllten, einen Unterdruck aufweisenden und/oder ein Vakuum aufweisenden Innenhohlraum 44 vollständig und luftdicht. Beispielsweise weist der Rest 42 eine Vertiefung auf, in welche ein an dem Ventilbereich 40 ausgebildeter Vorsprung nur teilweise hineinragt, während ein luftdichter Kontakt zwischen die Vertiefung und den Vorsprung umgebenden Flächen des Ventilbereichs 40 und des Rests 42 vorliegt. Ebenso kann der Ventilbereich 40 eine Vertiefung aufweisen, in welche ein an dem Rest 42 ausgebildeter Vorsprung (bei einem luftdichten Kontakt zwischen die Vertiefung und den Vorsprung umgebenden Flächen des Ventilbereichs 40 und des Rests 42) nur teilweise hineinragt. Auch mittels eines derart realisierten Lufteinschlusses, Unterdruckeinschlusses oder Vakuumeinschlusses kann die Ausbildung des Ventilkörpers 26 als Schwimmventil kostengünstig erreicht werden.

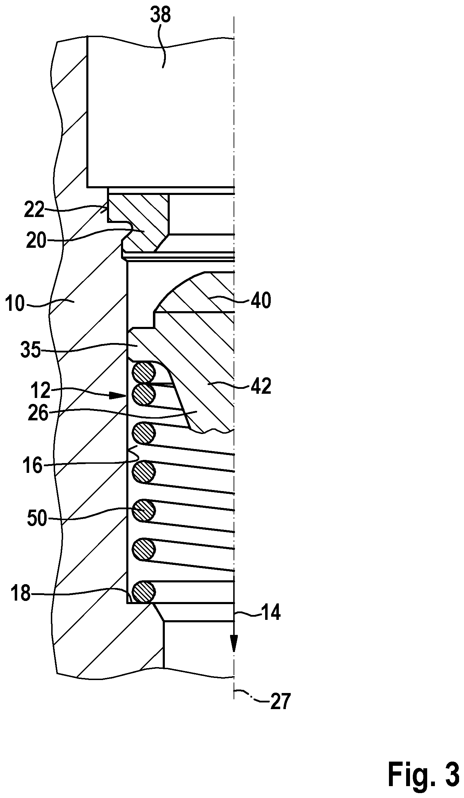

Fig. 3 zeigt eine schematische Teildarstellung einer dritten Ausführungsform des Hydraulikblocks.

Auch der in Fig. 3 teilweise schematisch dargestellte Hydraulikblock 10 weist einen in 2K-Technik hergestellten Ventilkörper 26 auf. Im Unterschied zu den zuvor beschriebenen Ausführungsformen hat das in dem Hydraulikblock 10 geschaffene Rückschlagventil 12 zusätzlich zu dem Ventilsitz 20 und dem Ventilkörper 26 noch eine Feder 50, welche direkt an dem Ventilkörper 26 verankert ist. Die direkte Verankerung der Feder 50 an dem Ventilkörper 26 verbessert eine zentrische Führung des Ventilkörpers 26 innerhalb der Rückschlagventil-Aufnahmebohrung 14 (im Vergleich zu einem federbestückten Rückschlagventil mit einer Trennung zwischen Ventilkörper und Feder) und trägt damit zur Unterdrückung von Verwirbelungen beim Durchströmen des Rückschlagventils 12 mit Bremsflüssigkeit in seiner vorgegebenen Durchflussrichtung bei. An dem Ventilkörper 26 ist eine Auflageschulter als Federauflage der Feder 50 ausgebildet. Außerdem ist die Hubbegrenzung mittels des ausgebildeten Anschlags des Ventilkörpers 26 an der Stufe 18 sichergestellt. Der Anschlag kann sowohl konisch als auch als (rechtwinklige/gestufe) Schulter ausgebildet sein.

Alle oben beschriebenen Hydraulikblöcke 10 sind in einer Vielzahl verschiedener Bremssysteme für Fahrzeuge/Kraftfahrzeuge einsetzbar. Es wird darauf hingewiesen, dass eine Verwendbarkeit der Hydraulikblöcke 10 weder auf einen speziellen Bremssystemtyp noch auf einen bestimmten Fahrzeugtyp/Kraftfahrzeugtyp beschränkt ist.

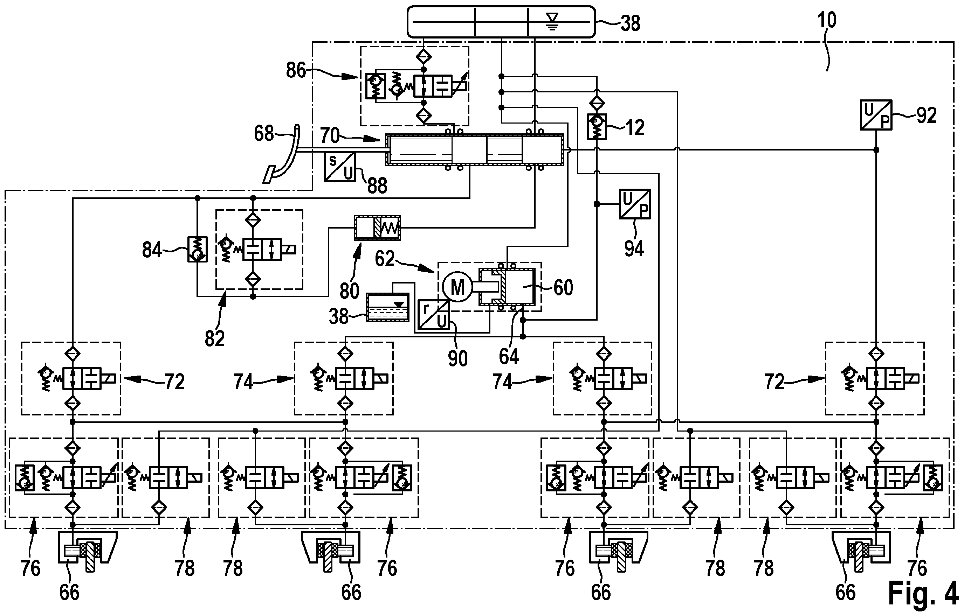

Fig. 4 zeigt einen Schaltplan einer Ausführungsform des Bremssystems.

Das mittels der Fig. 4 schematisch wiedergegebene Bremssystem ist in einer Vielzahl verschiedener Fahrzeuge/Kraftfahrzeuge einsetzbar. Es wird darauf hingewiesen, dass eine Verwendbarkeit des Bremssystems auf keinen bestimmten Fahrzeugtyp/
Kraftfahrzeugtyp limitiert ist.

Das Bremssystem der Fig. 4 kann mittels jeder der oben beschriebenen Ausführungsformen des Hydraulikblocks 10 realisiert werden. Das Rückschlagventil 12 kann wahlweise federfrei oder mit der Feder 50 ausgebildet sein. Auch der Ventilkörper 26 des Rückschlagventils 12 kann wahlweise einstückig oder in 2K-Technik hergestellt sein.

Als Weiterbildung ist in dem Hydraulikblock 10 des Bremssystems eine Plunger-Aufnahmebohrung 60 ausgebildet, in welcher eine motorisierte Kolben-Zylinder-Vorrichtung (bzw. eine Plungervorrichtung) 62 ausgebildet ist. Die Rückschlagventil-Aufnahmebohrung 14 ist hydraulisch mit der Plunger-Aufnahmebohrung 60 verbunden. Beispielsweise kann sich mindestens eine Leitung 64 zwischen der Rückschlagventil-Aufnahmebohrung 14 und der Plunger-Aufnahmebohrung 60 erstrecken oder die Rückschlagventil-Aufnahmebohrung 14 kann in der Plunger-Aufnahmebohrung 60 münden. Die Vorteile des Rückschlagventils 12 können somit zum Steigern oder Reduzieren mindestens eines Bremsdrucks in mindestens einem an dem Hydraulikblock 10 angebundenen Radbremszylinder 66 des Bremssystems mittels der motorisierten Kolben-Zylinder-Vorrichtung 62 genutzt werden. Somit kann der mindestens eine Bremsdruck in dem mindestens einen Radbremszylinder 66 nicht nur mittels einer auf ein Bremspedal 68 des Bremssystems ausgeübten Fahrerbremskraft gesteigert werden.

Als optionale Weiterbildungen weist der Hydraulikblock 10 der Fig. 4 noch einen Hauptbremszylinder 70, mindestens ein erstes Trennventil 72 zum Abkoppeln des mindestens einen Radbremszylinders 66 von dem Hauptbremszylinder 70, mindestens ein zweites Trennventil 74 zum Abkoppeln des mindestens einen Radbremszylinders 66 von der motorisierten Kolben-Zylinder-Vorrichtung 62, mindestens ein Radeinlassventil 76 (mit je einem parallel angeordneten Rückschlagventil) und/oder mindestens ein Radauslassventil 78 auf. Außerdem umfasst der Hydraulikblock 10 einen Simulator 80, welcher über ein Simulatorventil 82 und ein parallel dazu angeordnetes weiteres Rückschlagventil 84 an dem Hauptbremszylinder 70 angebunden ist. Eine Schnüffelbohrung des Hauptbremszylinders 70 ist zusätzlich über ein Reservoir-Trennventil 86 (mit einem parallel angeordneten Rückschlagventil) an dem Bremsflüssigkeitsreservoir 38 angebunden. Des Weiteren kann noch mindestens ein Sensor, wie beispielsweise ein Pedalwegsensor 88, ein Drehratensensor 90 (für einen Motor der motorisierten Kolben-Zylinder-Vorrichtung 62), ein Vordrucksensor 92 und/oder ein Plungerdrucksensor 94 in dem Hydraulikblock 10 eingesetzt sein.

Die Vorteile des Rückschlagventils 12 steigern eine Einsetzbarkeit der motorisierten Kolben-Zylinder-Vorrichtung 62 zum Steigern des mindestens einen Bremsdrucks in dem mindestens einen Radbremszylinder 66: Aufgrund der vorteilhaften Hubbegrenzung des Rückschlagventils 12 kann dieses bei einem mittels der motorisierten Kolben-Zylinder-Vorrichtung 62 bewirkten Druckaufbau sehr schnell schließen, so dass es zu keinem Verzögerungsverlust beim Steigern des mindestens einen Bremsdrucks in dem mindestens einen Radbremszylinder 66 kommt. Damit ist bei einem mittels der motorisierten Kolben-Zylinder-Vorrichtung 62 verstärkten oder autonom ausgeführten Bremsen ein vergleichsweise kurzer Bremsweg gewährleistet.

Aufgrund der vorteilhaften Dichtheit der flüssigkeitsdichten Abdichtung des Rückschlagventils 12 ist zudem sichergestellt, dass keine Leckage am Rückschlagventil 12 zu einer fälschlichen Annahme von Luft im Bremssystem führt. In dem Bremssystem der Fig. 4 ist ein Auftreten von unerwünschter Luft deshalb leicht erkennbar, indem über die motorisierte Kolben-Zylinder-Vorrichtung 62 Druck aufgebaut wird. Durch einen Abgleich/Vergleich zwischen Werten des Drehratensensors 90 und des Plungerdrucksensors 94 kann eine unzulässige Elastizität des Bremssystems, welche auf das Auftreten von unerwünschter Luft zurückführbar ist, verlässlich erkannt werden. Außerdem kann bei einer Ausbildung des Rückschlagventils 12 mit einem Schwimmventil als Ventilkörper 26 Luft automatisch über das Rückschlagventil 12 entweichen.

Das Rückschlagventil 12 eignet sich auch gut zum Nachschnüffeln. Ist alles Volumen in der Plunger-Aufnahmebohrung 60 verbraucht, obwohl der Fahrer oder eine automatische Geschwindigkeitssteuerung weiterhin eine Bremsdrucksteigerung anfordert, so kann die motorisierte Kolben-Zylinder-Vorrichtung durch Zurückziehen ihres Kolbens Volumen über das Rückschlagventil 12 aus dem Bremsflüssigkeitsreservoir 38 nachschnüffeln/nachladen. Der Ventilkörper 26 wird dabei von dem Ventilsitz 20 weggezogen und erlaubt aufgrund seiner strömungsoptimierten Form das in einer vergleichsweise kurzen Zeit relativ viel Volumen aus dem Bremsflüssigkeitsreservoir in die Plunger-Aufnahmebohrung 60 strömt. Dieses Volumen kann sofort für einen weiteren Bremsdruckaufbau in dem mindestens einen Radbremszylinder 66 eingesetzt werden.

Aufgrund seines strömungsoptimierten Designs ist das Rückschlagventil 12 selbst bei einer relativ geringen Temperatur und/oder einem vergleichsweise geringen atmosphärischen Druck (z.B. in Höhenlage) von vergleichsweise hohen Volumenströmen in Durchflussrichtung durchströmbar. Selbst bei einem geringen Differenzdruck (von nahezu 0 bar) zwischen einem Reservoirdruck und einem Plungerinnendruck, wie er bei tiefen Temperaturen oder bei einem geringen atmosphärischen Druck naturgemäß auftritt, ist die gute Durchströmbarkeit des Rückschlagventils 12 noch gewährleistet.

Es wird auch darauf hingewiesen, dass das Rückschlagventil 12 gute Leckagewerte und eine hohe Dichtheit, selbst bei einer relativ hohen Temperatur, aufweist. Nochmals wird darauf hingewiesen, dass bei einem Druckaufbau kein oder nur ein sehr geringer Voumenverlust über das Rückschlagventil 12 auftritt. Das Rückschlagventil 12 schafft alle diese Vorteile trotz seines kostenoptimierten Designs.

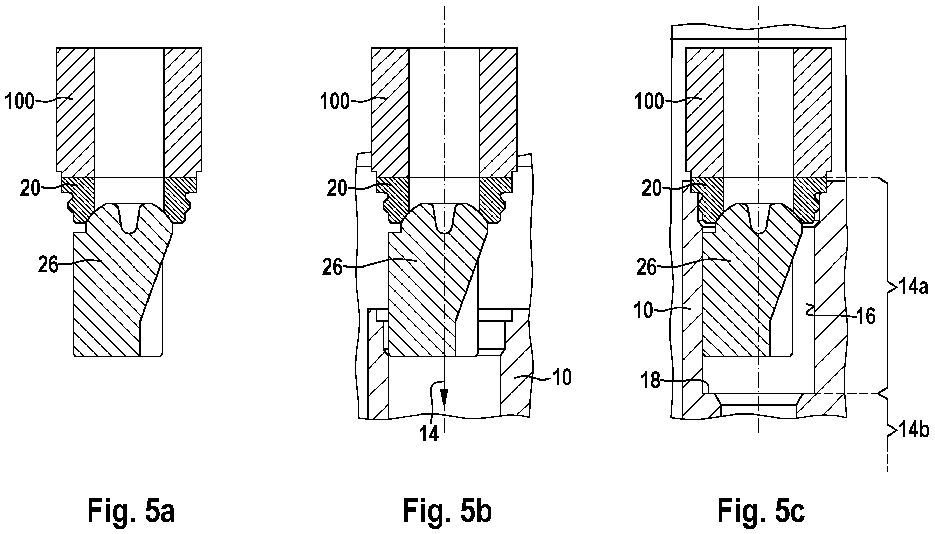

Fig. 5a bis 5f zeigen schematische Darstellungen von Verfahrensschritten einer Ausführungsform des Herstellungsverfahrens für einen Hydraulikblock für ein Bremssystem eines Fahrzeugs mit zumindest einem Rückschlagventil.

Das im Weiteren beschriebene Verfahren kann zum Herstellen aller oben ausgeführten Ausführungsformen von Hydraulikaggregaten oder des vorausgehend erläuterten Bremssystems genutzt werden. Es wird jedoch darauf hingewiesen, dass eine Ausführbarkeit des Verfahrens nicht auf eine Herstellung eines bestimmten Hydraulikblocktyps oder Bremssystemtyps limitiert ist.

Bei einem Ausführen des Verfahrens wird (in einem nicht-skizzierten Verfahrensschritt) eine sich teilweise durch den Hydraulikblock 10 erstreckende Rückschlagventil-Aufnahmebohrung 14 ausgebildet, wobei die Rückschlagventil-Aufnahmebohrung 14 als eine gestufte Vertiefung in den Hydraulikblock 10 eingeformt wird. Beispielsweise wird die Rückschlagventil-Aufnahmebohrung 14 mit einem gestuften Werkzeug in den Hydraulikblock 10 gebohrt/gespant. Die Rückschlagventil-Aufnahmebohrung 14 kann jedoch auch bei einem Gießen/Spritzgießen des Hydraulikblocks 10 darin eingedrückt werden.

Die Rückschlagventil-Aufnahmebohrung 14 wird mit einem ersten Teilbereich 14a mit zumindest einem Mindestdurchmesser und einem inneren zweiten Teilbereich 14b mit höchstens einem Höchstdurchmesser kleiner als dem Mindestdurchmesser geformt. Vorzugsweise wird ein Übergang zwischen dem ersten Teilbereich 14a und dem zweiten Teilbereich 14b als (rotationssymmetrische) Stufe 18 ausgebildet. Bei dieser strömungsoptimierten Ausbildung der Rückschlagventil-Aufnahmebohrung 14 entstehen kaum/keine Wirbel bei einem Durchströmen des späteren Rückschlagventils 12 mit einer Bremsflüssigkeit. Wie oben auch ausgeführt wird, kann die (rotationssymmetrische) Stufe 18 zur Hubbegrenzung des späteren Rückschlagventils 12 genutzt werden.

Das spätere Rückschlagventil 12 wird mit einem Ventilkörper 26 und mit einem Ventilsitz 20 ausgestattet (siehe Fig. 5a). Bei der Ausführungsform der Fig. 5a bis 5f geschieht dies, indem der Ventilkörper 26 mittels eines Stempels 100 (per Unterdruck) an den Ventilsitz 20 angesaugt wird. Gleichzeitig kann eine Dichtheit eines Kontakts zwischen dem Ventilkörper 26 und dem Ventilsitz 20 überprüft werden. Sofern ein flüssigkeitsdichter Kontakt zwischen dem Ventilkörper 26 und einem Dichtbereich 24 des Ventilsitzes 20 beim Ansaugen des Ventilkörpers 26 an den Ventilsitz 20 vorliegt, hat der Ventilkörper 26 einen sicheren Halt am Stempel 100 und kann deshalb mittels des Unterdrucks (trotz einer Gewichtskraft des Ventilkörpers 26) zu dem damit auszustattenden Hydraulikblock 10 transportiert werden. Liegt keine ausreichende Dichtheit zwischen dem Ventilkörper 26 und dem Ventilsitz 20 vor, so fällt zumindest der Ventilkörper 26 während des Transports (trotz des anliegenden Unterdrucks) herab.

Eine Überprüfung des Ventilkörpers 26 und des Ventilsitzes 20 ist somit schon während der Montage möglich. Auf diese Weise kann frühzeitig erkannt werden, ob ein die gewünschte Dichtheit des späteren Rückschlagventils 12 beeinträchtigender Fehler an dem Ventilkörper 26 oder an dem Ventilsitz 20 vorliegt, und gegebenenfalls kann das Verfahren vor einem Ausführen unnötiger Verfahrensschritte abgebrochen werden.

Fig. 5b zeigt ein Einbringen/Einfädeln des Ventilkörpers 26 in die Rückschlagventil-Aufnahmebohrung 14. Der Ventilkörper 26 wird innerhalb zumindest des ersten Teilbereichs 14a der Rückschlagventil-Aufnahmebohrung 14 verstellbar angeordnet, wobei mittels der konischen Hubbegrenzung ein Eindringen/Hineinfallen des Ventilkörpers 26 in den zweiten Teilbereich 14b der Rückschlagventil-Aufnahmebohrung 14 (aufgrund des Höchstdurchmessers kleiner als einer Ausdehnung des Ventilkörpers 26) verhindert ist.

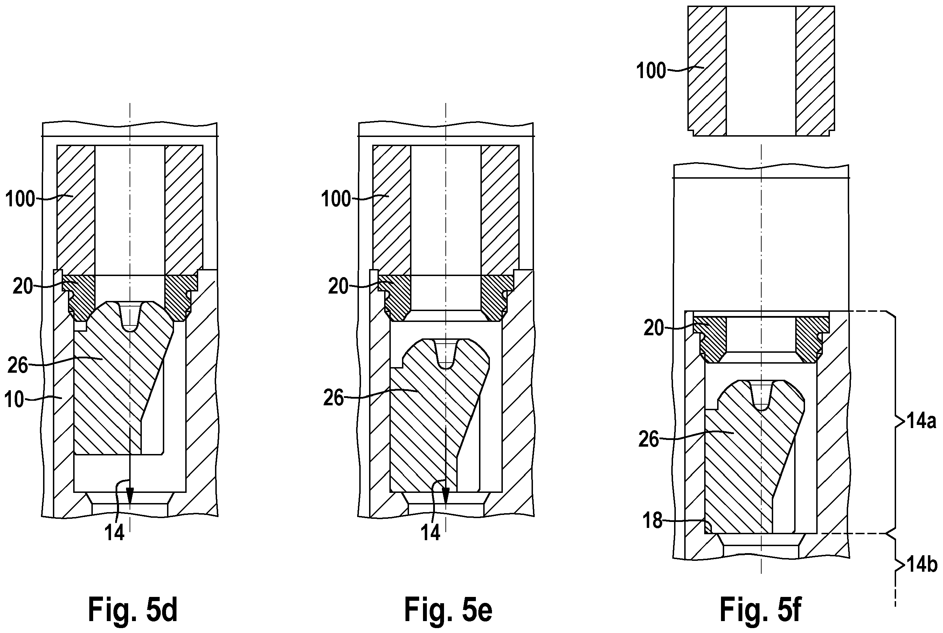

Auch der Ventilsitz 20 wird zumindest teilweise in die Rückschlagventil-Aufnahmebohrung 14 geführt, wie in Fig. 5c gezeigt ist. Danach wird der Ventilsitz 20 so befestigt, dass der Ventilsitz 20 zumindest teilweise in die Rückschlagventil-Aufnahmebohrung 14 hineinragt (siehe Fig. 5d). Beispielsweise wird der Ventilsitz 20 in mindestens ein Material des Hydraulikblocks 10 so eingepresst, dass ein flüssigkeitsdichter Kontakt zwischen dem Ventilsitz 20 und dem Hydraulikblock 10 vorliegt. Die Befestigung des Ventilsitzes 20 an dem Hydraulikblock 10 kann auch als eine Dichtverpressung umschrieben werden. Dabei kann das mindestens eine Material des Hydraulikblocks 10 verformt werden. Insbesondere kann der Ventilsitz 20 über das mindestens eine Material des Hydraulikblocks 10 geführt werden.

Bei dem in Fig. 5d gezeigten Verfahrensschritt wird aufgrund der geschaffenen Dichtheit zwischen dem Ventilsitz 20 und dem Hydraulikblock 10 auch sichergestellt, dass das spätere Rückschlagventil 12 mittels eines (flüssigkeitsdichten) Kontakts zwischen dem Ventilkörper 26 und dem Ventilsitz 20 (flüssigkeitsdicht) abgedichtet wird. Der Ventilsitz 20 wird in einem direkten Kontakt mit mindestens einer Innenwand 16 der Rückschlagventil-Aufnahmebohrung 14 an und/oder in der Rückschlagventil-Aufnahmebohrung 14 eingesetzt.

Anschließend kann unter Weiterverwendung des Stempels 100 eine Durchflussmessung durchgeführt werden, wie in Fig. 5e schematisch wiedergegeben ist. Über Unterdruck kann auch eine weitere Dichtheitsmessung ausgeführt werden.

Fig. 5f zeigt das Rückschlagventil 12 nach einem Beendigen des hier beschriebenen Verfahrens. Zu erkennen ist, dass der Ventilkörper 26 käfigfrei innerhalb des ersten Teilbereichs 14a der Rückschlagventil-Aufnahmebohrung 14verstellbar eingesetzt ist. Damit schafft auch das hier beschriebene Verfahren die oben aufgezählten Vorteile.

## Patentansprüche

1. Hydraulikblock (10) für ein Bremssystem eines Fahrzeugs mit:
zumindest einem Rückschlagventil (12), welches in einer sich teilweise durch den Hydraulikblock (10) erstreckenden Rückschlagventil-Aufnahmebohrung (14) angeordnet ist, mit
- einem fest angeordneten und zumindest teilweise in die Rückschlagventil-Aufnahmebohrung (14) hineinragenden Ventilsitz (20); und
- einem innerhalb zumindest eines ersten Teilbereichs (14a) der Rückschlagventil-Aufnahmebohrung (14) verstellbaren Ventilkörper (26);
wobei das Rückschlagventil (12) mittels eines Kontakts zwischen dem Ventilkörper (26) und dem Ventilsitz (20) abdichtbar ist;
wobei die Rückschlagventil-Aufnahmebohrung (14) als eine gestufte Vertiefung in den Hydraulikblock (10) eingeformt ist mit dem ersten Teilbereich (14a) mit zumindest einem Mindestdurchmesser und einem inneren zweiten Teilbereich (14b) mit höchstens einem Höchstdurchmesser kleiner als dem Mindestdurchmesser;
wobei der Ventilsitz (20) in einem direkten Kontakt mit mindestens einer Innenwand (16) der Rückschlagventil-Aufnahmebohrung (14) an und/oder in der Rückschlagventil-Aufnahmebohrung (14) eingesetzt ist;
wobei der Ventilkörper (26) käfigfrei innerhalb des ersten Teilbereichs (14a) der Rückschlagventil-Aufnahmebohrung (14) verstellbar angeordnet ist;
und wobei der Ventilkörper (26) rotationssymmetrisch mit einer zu dem Ventilsitz (20) ausgerichteten gerundeten Seite (28) ausgebildet ist;
**dadurch gekennzeichnet, dass**
der Ventilkörper (26) einen kegelförmigen oder kegelstumpfförmigen Zwischenabschnitt (30) oder Endabschnitt umfasst; und
auf einer von dem Ventilsitz (20) weg gerichteten Seite (32) des Ventilkörpers (26) Führungsvorsprünge (34) ausgebildet sind, welche in Führungsbahnen in der mindestens einen Innenwand (16) der Rückschlagventil-Aufnahmebohrung (14) hineinragen.

2. Hydraulikblock (10) für ein Bremssystem eines Fahrzeugs mit:
zumindest einem Rückschlagventil (12), welches in einer sich teilweise durch den Hydraulikblock (10) erstreckenden Rückschlagventil-Aufnahmebohrung (14) angeordnet ist, mit
- einem fest angeordneten und zumindest teilweise in die Rückschlagventil-Aufnahmebohrung (14) hineinragenden Ventilsitz (20); und
- einem innerhalb zumindest eines ersten Teilbereichs (14a) der Rückschlagventil-Aufnahmebohrung (14) verstellbaren Ventilkörper (26);
wobei das Rückschlagventil (12) mittels eines Kontakts zwischen dem Ventilkörper (26) und dem Ventilsitz (20) abdichtbar ist;
wobei die Rückschlagventil-Aufnahmebohrung (14) als eine gestufte Vertiefung in den Hydraulikblock (10) eingeformt ist mit dem ersten Teilbereich (14a) mit zumindest einem Mindestdurchmesser und einem inneren zweiten Teilbereich (14b) mit höchstens einem Höchstdurchmesser kleiner als dem Mindestdurchmesser;
wobei der Ventilsitz (20) in einem direkten Kontakt mit mindestens einer Innenwand (16) der Rückschlagventil-Aufnahmebohrung (14) an und/oder in der Rückschlagventil-Aufnahmebohrung (14) eingesetzt ist;
wobei der Ventilkörper (26) käfigfrei innerhalb des ersten Teilbereichs (14a) der Rückschlagventil-Aufnahmebohrung (14) verstellbar angeordnet ist;
und wobei der Ventilkörper (26) rotationssymmetrisch mit einer zu dem Ventilsitz (20) ausgerichteten gerundeten Seite (28) ausgebildet ist;
**dadurch gekennzeichnet, dass**
der Ventilkörper (26) einen kegelförmigen oder kegelstumpfförmigen Zwischenabschnitt (30) umfasst und an einem zu der gerundeten Seite (28) benachbarten Teil des Zwischenabschnitts (30) Führungsvorsprünge (35) aufweist, welche in Führungsbahnen in der mindestens einen Innenwand (16) der Rückschlagventil-Aufnahmebohrung (14) hineinragen; und
an dem Ventilkörper (26) eine Auflageschulter als Federauflage einer Feder (50) ausgebildet ist, wobei die Feder (50) an einer zwischen dem ersten Teilbereich (14a) und dem zweiten Teilbereich (14b) ausgebildeten Stufe (18) abgestützt ist.

3. Hydraulikblock (10) nach Anspruch 1 oder 2, wobei ein die zu dem Ventilsitz (20) ausgerichtete gerundeten Seite (28) aufweisender Ventilbereich (40) des Ventilkörpers (26) aus einem ersten Material mit einem ersten mechanischen Widerstand ausgebildet ist, und ein Rest (42) des Ventilkörpers (26) aus einem zweiten Material mit einem zweiten mechanischen Widerstand kleiner als dem ersten mechanischen Widerstand ausgebildet ist.

4. Hydraulikblock (10) nach einem der vorhergehenden Ansprüche, wobei die Rückschlagventil-Aufnahmebohrung (14) auf einer Reservoirseite (36) des Hydraulikblocks (10), an welcher ein Bremsflüssigkeitsreservoir (38) montierbar oder montiert ist, ausgebildet ist.

5. Hydraulikblock (10) nach Anspruch 4, wobei eine Plunger-Aufnahmebohrung (60) in dem Hydraulikblock (10) ausgebildet ist und die Rückschlagventil-Aufnahmebohrung (14) hydraulisch mit der Plunger-Aufnahmebohrung (60) verbunden ist.

6. Hydraulikblock (10) nach einem der vorhergehenden Ansprüche, wobei der Ventilsitz (20) eine Schneidkante aufweist, und das mindestens eine Material des Hydraulikblocks (10) gegenüber dem mindestens einen Material des Ventilsitzes (20) weicher ist und aufgrund eines Kontakts mit der Schneidkante des Ventilsitzes (20) umgeformt ist.

7. Bremssystem für ein Fahrzeug mit einem Hydraulikblock (10) nach einem der vorhergehenden Ansprüche.

8. Herstellungsverfahren für einen Hydraulikblock (10) für ein Bremssystem eines Fahrzeugs mit zumindest einem Rückschlagventil (12) mit den Schritten:
Ausbilden einer sich teilweise durch den Hydraulikblock (10) erstreckenden Rückschlagventil-Aufnahmebohrung (14);
Einbringen eines Ventilkörpers (26) des späteren Rückschlagventils (12) in die Rückschlagventil-Aufnahmebohrung (14) so, dass der Ventilkörper (26) innerhalb zumindest eines ersten Teilbereichs (14a) der Rückschlagventil-Aufnahmebohrung (14) verstellbar ist; und
Befestigen eines Ventilsitzes (20) des späteren Rückschlagventils (12) so, dass der Ventilsitz (20) zumindest teilweise in die Rückschlagventil-Aufnahmebohrung (14) hineinragt und das spätere Rückschlagventil (12) mittels eines Kontakts zwischen dem Ventilkörper (26) und dem Ventilsitz (20) abdichtet wird;
wobei die Rückschlagventil-Aufnahmebohrung (14) als eine gestufte Vertiefung in den Hydraulikblock (10) eingeformt wird mit dem ersten Teilbereich (14a) mit zumindest einem Mindestdurchmesser und einem inneren zweiten Teilbereich (14b) mit höchstens einem Höchstdurchmesser kleiner als dem Mindestdurchmesser;
wobei der Ventilsitz (20) in einem direkten Kontakt mit mindestens einer Innenwand (16) der Rückschlagventil-Aufnahmebohrung (14) an und/oder in der Rückschlagventil-Aufnahmebohrung (14) eingesetzt wird;
wobei der Ventilkörper (26) käfigfrei innerhalb des ersten Teilbereichs (14a) der Rückschlagventil-Aufnahmebohrung (14) verstellbar eingesetzt wird;
und wobei der Ventilkörper (26) rotationssymmetrisch mit einer zu dem Ventilsitz (20) ausgerichteten gerundeten Seite (28) ausgebildet wird;
**dadurch gekennzeichnet, dass**
der Ventilkörper (26) mit einem kegelförmigen oder kegelstumpfförmigen Zwischenabschnitt (30) oder Endabschnitt ausgebildet wird; und
auf einer von dem Ventilsitz (20) weg gerichteten Seite (32) des Ventilkörpers (26) Führungsvorsprünge (34) ausgebildet werden, welche in Führungsbahnen in der mindestens einen Innenwand (16) der Rückschlagventil-Aufnahmebohrung (14) hineinragen.

9. Herstellungsverfahren für einen Hydraulikblock (10) für ein Bremssystem eines Fahrzeugs mit zumindest einem Rückschlagventil (12) mit den Schritten:
Ausbilden einer sich teilweise durch den Hydraulikblock (10) erstreckenden Rückschlagventil-Aufnahmebohrung (14);
Einbringen eines Ventilkörpers (26) des späteren Rückschlagventils (12) in die Rückschlagventil-Aufnahmebohrung (14) so, dass der Ventilkörper (26) innerhalb zumindest eines ersten Teilbereichs (14a) der Rückschlagventil-Aufnahmebohrung (14) verstellbar ist; und
Befestigen eines Ventilsitzes (20) des späteren Rückschlagventils (12) so, dass der Ventilsitz (20) zumindest teilweise in die Rückschlagventil-Aufnahmebohrung (14) hineinragt und das spätere Rückschlagventil (12) mittels eines Kontakts zwischen dem Ventilkörper (26) und dem Ventilsitz (20) abdichtet wird;
wobei die Rückschlagventil-Aufnahmebohrung (14) als eine gestufte Vertiefung in den Hydraulikblock (10) eingeformt wird mit dem ersten Teilbereich (14a) mit zumindest einem Mindestdurchmesser und einem inneren zweiten Teilbereich (14b) mit höchstens einem Höchstdurchmesser kleiner als dem Mindestdurchmesser;
wobei der Ventilsitz (20) in einem direkten Kontakt mit mindestens einer Innenwand (16) der Rückschlagventil-Aufnahmebohrung (14) an und/oder in der Rückschlagventil-Aufnahmebohrung (14) eingesetzt wird;
wobei der Ventilkörper (26) käfigfrei innerhalb des ersten Teilbereichs (14a) der Rückschlagventil-Aufnahmebohrung (14) verstellbar eingesetzt wird;
und wobei der Ventilkörper (26) rotationssymmetrisch mit einer zu dem Ventilsitz (20) ausgerichteten gerundeten Seite (28) ausgebildet wird;
**dadurch gekennzeichnet, dass**
der Ventilkörper (26) mit einem kegelförmigen oder kegelstumpfförmigen Zwischenabschnitt (30) ausgebildet wird, und an einem zu der gerundeten Seite (28) benachbarten Teil des Zwischenabschnitts (30) Führungsvorsprünge (35) ausgebildet werden, welche in Führungsbahnen in der mindestens einen Innenwand (16) der Rückschlagventil-Aufnahmebohrung (14) hineinragen; und
an dem Ventilkörper (26) eine Auflageschulter als Federauflage einer Feder (50) ausgebildet wird, wobei die Feder (50) an einer zwischen dem ersten Teilbereich (14a) und dem zweiten Teilbereich (14b) ausgebildeten Stufe (18) abgestützt wird.

10. Herstellungsverfahren nach Anspruch 8 oder 9, wobei vor dem Einbringen des Ventilkörpers (26) und dem Befestigen des Ventilsitzes (20) der Ventilkörper (26) mittels eines Stempels (100) an den Ventilsitz (20) angesaugt wird, und wobei gleichzeitig eine Dichtheit eines Kontakts zwischen dem Ventilkörper (26) und dem Ventilsitz (20) überprüft wird.

## Claims

1. Hydraulic block (10) for a brake system of a vehicle, having:
at least one check valve (12) which is arranged in a check valve receiving bore (14) which extends partially through the hydraulic block (10), having
- a fixedly arranged valve seat (20) which projects at least partially into the check valve receiving bore (14); and
- a valve body (26) which is adjustable within at least a first subregion (14a) of the check valve receiving bore (14);
wherein the check valve (12) can be sealed off by means of contact between the valve body (26) and the valve seat (20) ;
wherein the check valve receiving bore (14) is formed as a stepped depression in the hydraulic block (10), having the first subregion (14a) with at least a minimum diameter and having an inner, second subregion (14b) with at most a maximum diameter smaller than the minimum diameter;
wherein the valve seat (20) is inserted at and/or in the check valve receiving bore (14) so as to be in direct contact with at least an inner wall (16) of the check valve receiving bore (14);
wherein the valve body (26) is arranged adjustably within the first subregion (14a) of the check valve receiving bore (14) without a cage;
and wherein the valve body (26) is of rotationally symmetrical form with a rounded side (28) directed towards the valve seat (20);
**characterized in that**
the valve body (26) comprises a conical or frustoconical intermediate portion (30) or end portion; and,
on a side (32) of the valve body (26) directed away from the valve seat (20), there are formed guide projections (34) which project into guide tracks in the at least one inner wall (16) of the check valve receiving bore (14).

2. Hydraulic block (10) for a brake system of a vehicle, having:
at least one check valve (12) which is arranged in a check valve receiving bore (14) which extends partially through the hydraulic block (10), having
- a fixedly arranged valve seat (20) which projects at least partially into the check valve receiving bore (14); and
- a valve body (26) which is adjustable within at least a first subregion (14a) of the check valve receiving bore (14);
wherein the check valve (12) can be sealed off by means of contact between the valve body (26) and the valve seat (20) ;
wherein the check valve receiving bore (14) is formed as a stepped depression in the hydraulic block (10), having the first subregion (14a) with at least a minimum diameter and having an inner, second subregion (14b) with at most a maximum diameter smaller than the minimum diameter;
wherein the valve seat (20) is inserted at and/or in the check valve receiving bore (14) so as to be in direct contact with at least an inner wall (16) of the check valve receiving bore (14);
wherein the valve body (26) is arranged adjustably within the first subregion (14a) of the check valve receiving bore (14) without a cage;
and wherein the valve body (26) is of rotationally symmetrical form with a rounded side (28) directed towards the valve seat (20);
**characterized in that**
the valve body (26) comprises a conical or frustoconical intermediate portion (30) and, on a part of the intermediate portion (30) adjacent to the rounded side (28), there are formed guide projections (35) which project into guide tracks in the at least one inner wall (16) of the check valve receiving bore (14); and
a support shoulder as a spring support of a spring (50) is formed on the valve body (26), wherein the spring (50) is supported on a step (18) which is formed between the first subregion (14a) and the second subregion (14b).

3. Hydraulic block (10) according to Claim 1 or 2, wherein a valve region (40), which has the rounded side (28) directed towards the valve seat (20), of the valve body (26) is formed from a first material with a first mechanical resistance, and a remainder (42) of the valve body (26) is formed from a second material with a second mechanical resistance lower than the first mechanical resistance.

4. Hydraulic block (10) according to any of the preceding claims, wherein the check valve receiving bore (14) is formed on a reservoir side (36), on which a brake fluid reservoir (38) can be or is mounted, of the hydraulic block (10).

5. Hydraulic block (10) according to Claim 4, wherein a plunger receiving bore (60) is formed in the hydraulic block (10), and the check valve receiving bore (14) is hydraulically connected to the plunger receiving bore (60) .

6. Hydraulic block (10) according to any of the preceding claims, wherein the valve seat (20) has a cutting edge, and the at least one material of the hydraulic block (10) is softer in relation to the at least one material of the valve seat (20) and is deformed as a result of contact with the cutting edge of the valve seat (20).

7. Brake system for a vehicle having a hydraulic block (10) according to any of the preceding claims.

8. Production method for a hydraulic block (10) for a brake system of a vehicle having at least one check valve (12), having the steps:
forming a check valve receiving bore (14) which extends partially through the hydraulic block (10);
introducing a valve body (26) of what will later be the check valve (12) into the check valve receiving bore (14) such that the valve body (26) is adjustable within at least a first subregion (14a) of the check valve receiving bore (14); and
fastening a valve seat (20) of what will later be the check valve (12) such that the valve seat (20) projects at least partially into the check valve receiving bore (14), and what will later be the check valve (12) is sealed off by means of contact between the valve body (26) and the valve seat (20);
wherein the check valve receiving bore (14) is formed as a stepped depression in the hydraulic block (10), having the first subregion (14a) with at least a minimum diameter and having an inner, second subregion (14b) with at most a maximum diameter smaller than the minimum diameter;
wherein the valve seat (20) is inserted at and/or in the check valve receiving bore (14) so as to be in direct contact with at least an inner wall (16) of the check valve receiving bore (14);
wherein the valve body (26) is arranged adjustably within the first subregion (14a) of the check valve receiving bore (14) without a cage;
and wherein the valve body (26) is formed so as to be rotationally symmetrical, with a rounded side (28) directed towards the valve seat (20);
**characterized in that**
the valve body (26) is formed with a conical or frustoconical intermediate portion (30) or end portion; and,
on a side (32) of the valve body (26) directed away from the valve seat (20), there are formed guide projections (34) which project into guide tracks in the at least one inner wall (16) of the check valve receiving bore (14).

9. Production method for a hydraulic block (10) for a brake system of a vehicle having at least one check valve (12), having the steps:
forming a check valve receiving bore (14) which extends partially through the hydraulic block (10);
introducing a valve body (26) of what will later be the check valve (12) into the check valve receiving bore (14) such that the valve body (26) is adjustable within at least a first subregion (14a) of the check valve receiving bore (14); and
fastening a valve seat (20) of what will later be the check valve (12) such that the valve seat (20) projects at least partially into the check valve receiving bore (14), and what will later be the check valve (12) is sealed off by means of contact between the valve body (26) and the valve seat (20);
wherein the check valve receiving bore (14) is formed as a stepped depression in the hydraulic block (10), having the first subregion (14a) with at least a minimum diameter and having an inner, second subregion (14b) with at most a maximum diameter smaller than the minimum diameter;
wherein the valve seat (20) is inserted at and/or in the check valve receiving bore (14) so as to be in direct contact with at least an inner wall (16) of the check valve receiving bore (14);
wherein the valve body (26) is arranged adjustably within the first subregion (14a) of the check valve receiving bore (14) without a cage;
and wherein the valve body (26) is formed so as to be rotationally symmetrical, with a rounded side (28) directed towards the valve seat (20);
**characterized in that**
the valve body (26) is formed with a conical or frustoconical intermediate portion (30) and, on a part of the intermediate portion (30) adjacent to the rounded side (28), there are formed guide projections (35) which project into guide tracks in the at least one inner wall (16) of the check valve receiving bore (14); and
a support shoulder as a spring support of a spring (50) is formed on the valve body (26), wherein the spring (50) is supported on a step (18) which is formed between the first subregion (14a) and the second subregion (14b).

10. Production method according to Claim 8 or 9, wherein, prior to the introduction of the valve body (26) and the fastening of the valve seat (20), the valve body (26) is pulled against the valve seat (20) by suction by means of a plunger (100), and wherein at the same time a leak-tightness of contact between the valve body (26) and the valve seat (20) is checked.

## Revendications

1. Bloc hydraulique (10) pour un système de freinage d'un véhicule, comprenant :
au moins un clapet antiretour (12) qui est disposé dans un alésage de réception de clapet antiretour (14) s'étendant en partie à travers le bloc hydraulique (10), comprenant
- un siège de soupape (20) disposé fixement et pénétrant au moins en partie dans l'alésage de réception de clapet antiretour (14) ; et
- un corps de soupape (26) pouvant être déplacé à l'intérieur d'au moins une première région partielle (14a) de l'alésage de réception de clapet antiretour (14) ;
le clapet antiretour (12) pouvant être étanchéifié au moyen d'un contact entre le corps de soupape (26) et le siège de soupape (20) ;
l'alésage de réception de clapet antiretour (14) étant formé en tant que renfoncement étagé dans le bloc hydraulique (10), avec la première région partielle (14a) ayant au moins un diamètre minimum et une deuxième région partielle intérieure (14b) ayant au plus un diamètre maximum inférieur au diamètre minimum ;
le siège de soupape (20) étant inséré, en contact direct avec au moins une paroi intérieure (16) de l'alésage de réception de clapet antiretour (14), contre et/ou dans l'alésage de réception de clapet antiretour (14) ;
le corps de soupape (26) étant disposé de manière déplaçable sans cage à l'intérieur de la première région partielle (14a) de l'alésage de réception de clapet antiretour (14) ;
et le corps de soupape (26) étant réalisé avec une symétrie de révolution avec un côté arrondi (28) orienté vers le siège de soupape (20) ;
**caractérisé en ce que**
le corps de soupape (26) comprend une portion intermédiaire (30) ou portion d'extrémité de forme conique ou tronconique (30); et
des saillies de guidage (34) sont réalisées sur un côté (32) du corps de soupape (26) orienté à l'écart du siège de soupape (20), lesquelles pénètrent dans des pistes de guidage dans l'au moins une paroi intérieure (16) de l'alésage de réception de clapet antiretour (14).

2. Bloc hydraulique (10) pour un système de freinage d'un véhicule, comprenant :
au moins un clapet antiretour (12) qui est disposé dans un alésage de réception de clapet antiretour (14) s'étendant en partie à travers le bloc hydraulique (10), comprenant
- un siège de soupape (20) disposé fixement et pénétrant au moins en partie dans l'alésage de réception de clapet antiretour (14) ; et
- un corps de soupape (26) pouvant être déplacé à l'intérieur d'au moins une première région partielle (14a) de l'alésage de réception de clapet antiretour (14) ;
le clapet antiretour (12) pouvant être étanchéifié au moyen d'un contact entre le corps de soupape (26) et le siège de soupape (20) ;
l'alésage de réception de clapet antiretour (14) étant formé en tant que renfoncement étagé dans le bloc hydraulique (10), avec la première région partielle (14a) ayant au moins un diamètre minimum et une deuxième région partielle intérieure (14b) ayant au plus un diamètre maximum inférieur au diamètre minimum ;
le siège de soupape (20) étant inséré, en contact direct avec au moins une paroi intérieure (16) de l'alésage de réception de clapet antiretour (14), contre et/ou dans l'alésage de réception de clapet antiretour (14) ;
le corps de soupape (26) étant disposé de manière déplaçable sans cage à l'intérieur de la première région partielle (14a) de l'alésage de réception de clapet antiretour (14) ;
et le corps de soupape (26) étant réalisé avec une symétrie de révolution avec un côté arrondi (28) orienté vers le siège de soupape (20) ;
**caractérisé en ce que**
le corps de soupape (26) comprend une portion intermédiaire (30) de forme conique ou tronconique (30) et des saillies de guidage (35) au niveau d'une partie de la portion intermédiaire (30) adjacente au côté arrondi (28), lesquelles pénètrent dans des pistes de guidage dans l'au moins une paroi intérieure (16) de l'alésage de réception de clapet antiretour (14) ; et
un épaulement d'appui en tant qu'appui de ressort d'un ressort (50) est réalisé au niveau du corps de soupape (26), le ressort (50) étant supporté au niveau d'un gradin (18) réalisé entre la première région partielle (14a) et la deuxième région partielle (14b).

3. Bloc hydraulique (10) selon la revendication 1 ou 2, dans lequel une région de soupape (40) du corps de soupape (26) présentant le côté arrondi (28) orienté vers le siège de soupape (20) est réalisée à partir d'un premier matériau avec une première résistance mécanique, et le reste (42) du corps de soupape (26) est réalisé à partir d'un deuxième matériau ayant une deuxième résistance mécanique inférieure à la première résistance mécanique.

4. Bloc hydraulique (10) selon l'une quelconque des revendications précédentes, dans lequel l'alésage de réception de clapet antiretour (14) est réalisé sur un côté de réservoir (36) du bloc hydraulique (10), au niveau duquel un réservoir de liquide de frein (38) est ou peut être monté.

5. Bloc hydraulique (10) selon la revendication 4, dans lequel un alésage de réception de plongeur (60) est réalisé dans le bloc hydraulique (10) et l'alésage de réception de clapet antiretour (14) est connecté hydrauliquement à l'alésage de réception de plongeur (60).

6. Bloc hydraulique (10) selon l'une quelconque des revendications précédentes, dans lequel le siège de soupape (20) présente une arête de coupe, et l'au moins un matériau du bloc hydraulique (10) est plus souple par rapport à l'au moins un matériau du siège de soupape (20) et est déformé du fait d'un contact avec l'arête de coupe du siège de soupape (20).

7. Système de frein pour un véhicule comprenant un bloc hydraulique (10) selon l'une quelconque des revendications précédentes.

8. Procédé de fabrication pour un bloc hydraulique (10) pour un système de frein d'un véhicule comprenant au moins un clapet antiretour (12), comprenant les étapes :
réalisation d'un alésage de réception de clapet antiretour (14) s'étendant en partie à travers le bloc hydraulique (10) ;
introduction d'un corps de soupape (26) du clapet antiretour ultérieur (12) dans l'alésage de réception de clapet antiretour (14) de telle sorte que le corps de soupape (26) puisse être déplacé à l'intérieur d'au moins une première région partielle (14a) de l'alésage de réception de clapet antiretour (14) ; et
fixation d'un siège de soupape (20) du clapet antiretour ultérieur (12) de telle sorte que le siège de soupape (20) pénètre au moins en partie dans l'alésage de réception de clapet antiretour (14) et que le clapet antiretour ultérieur (12) soit étanchéifié au moyen d'un contact entre le corps de soupape (26) et le siège de soupape (20) ;
l'alésage de réception de clapet antiretour (14) étant formé en tant que renfoncement étagé dans le bloc hydraulique (10), avec la première région partielle (14a) ayant au moins un diamètre minimum et une deuxième région partielle intérieure (14b) ayant au plus un diamètre maximum inférieur au diamètre minimum ;
le siège de soupape (20) étant inséré, en contact direct avec au moins une paroi intérieure (16) de l'alésage de réception de clapet antiretour (14), contre et/ou dans l'alésage de réception de clapet antiretour (14) ;
le corps de soupape (26) étant inséré de manière déplaçable sans cage à l'intérieur de la première région partielle (14a) de l'alésage de réception de clapet antiretour (14) ;
et le corps de soupape (26) étant réalisé avec une symétrie de révolution avec un côté arrondi (28) orienté vers le siège de soupape (20) ;
**caractérisé en ce que**
le corps de soupape (26) est réalisé avec une portion intermédiaire (30) ou une portion d'extrémité de forme conique ou tronconique ; et
des saillies de guidage (34) sont réalisées sur un côté (32) du corps de soupape (26) orienté à l'écart du siège de soupape (20), lesquelles pénètrent dans des pistes de guidage dans l'au moins une paroi intérieure (16) de l'alésage de réception de clapet antiretour (14).

9. Procédé de fabrication pour un bloc hydraulique (10) pour un système de freinage d'un véhicule comprenant au moins un clapet antiretour (12), comprenant les étapes :
réalisation d'un alésage de réception de clapet antiretour (14) s'étendant en partie à travers le bloc hydraulique (10) ;
introduction d'un corps de soupape (26) du clapet antiretour ultérieur (12) dans l'alésage de réception de clapet antiretour (14) de telle sorte que le corps de soupape (26) puisse être déplacé à l'intérieur d'au moins une première région partielle (14a) de l'alésage de réception de clapet antiretour (14) ; et
fixation d'un siège de soupape (20) du clapet antiretour ultérieur (12) de telle sorte que le siège de soupape (20) pénètre au moins en partie dans l'alésage de réception de clapet antiretour (14) et que le clapet antiretour ultérieur (12) soit étanchéifié au moyen d'un contact entre le corps de soupape (26) et le siège de soupape (20) ;
l'alésage de réception de clapet antiretour (14) étant formé en tant que renfoncement étagé dans le bloc hydraulique (10), avec la première région partielle (14a) ayant au moins un diamètre minimum et une deuxième région partielle intérieure (14b) ayant au plus un diamètre maximum inférieur au diamètre minimum ;
le siège de soupape (20) étant inséré, en contact direct avec au moins une paroi intérieure (16) de l'alésage de réception de clapet antiretour (14), contre et/ou dans l'alésage de réception de clapet antiretour (14) ;
le corps de soupape (26) étant inséré de manière déplaçable sans cage à l'intérieur de la première région partielle (14a) de l'alésage de réception de clapet antiretour (14) ;
et le corps de soupape (26) étant réalisé avec une symétrie de révolution avec un côté arrondi (28) orienté vers le siège de soupape (20) ;
**caractérisé en ce que**
le corps de soupape (26) est réalisé avec une portion intermédiaire (30) de forme conique ou tronconique et des saillies de guidage (35) sont réalisées au niveau d'une partie de la portion intermédiaire (30) adjacente au côté arrondi (28), lesquelles pénètrent dans des pistes de guidage dans l'au moins une paroi intérieure (16) de l'alésage de réception de clapet antiretour (14) ; et
un épaulement d'appui en tant qu'appui de ressort d'un ressort (50) est réalisé au niveau du corps de soupape (26), le ressort (50) étant supporté au niveau d'un gradin (18) réalisé entre la première région partielle (14a) et la deuxième région partielle (14b).

10. Procédé de fabrication selon la revendication 8 ou 9, dans lequel, avant l'introduction du corps de soupape (26) et la fixation du siège de soupape (20), le corps de soupape (26) est aspiré au moyen d'un poinçon (100) au niveau du siège de soupape (20), et simultanément une étanchéité d'un contact entre le corps de soupape (26) et le siège de soupape (20) est vérifiée.
